# EUROPÄISCHE PATENTSCHRIFT

(11) **EP 3 602 718 B1**
(45) Veröffentlichungstag und Bekanntmachung des Hinweises auf die Patenterteilung: **17.02.2021**
(21) Anmeldenummer: 17727162.4
(22) Anmeldetag: 23.05.2017
(51) Int. Cl.: H02J 3/16, H02J 3/18, H02J 3/38

(54) **STABILISIEREN EINES ENERGIEVERSORGUNGSNETZES**
STABILIZATION OF AN ENERGY SUPPLY NETWORK
STABILISATION D'UN RÉSEAU ÉLECTRIQUE

(43) Veröffentlichungstag der Anmeldung: 05.02.2020
(73) Patentinhaber: Siemens Energy Global GmbH & Co. KG, 81739 München (DE)
(72) Erfinder: ARMSCHAT, Christoph, 91058 Erlangen (DE); SPAHIC, Ervin, 91052 Erlangen (DE); MÜLLER, Holger, 91096 M hrendorf (DE)
(86) Internationale Anmeldenummer: PCT/EP2017/062446
(87) Internationale Veröffentlichungsnummer: WO 2018/215059

(56) Entgegenhaltungen:
- WO-A1-2012/045231
- CN-B- 101 924 371
- CN-U- 204 030 611
- US-A- 4 922 364
- VERRA HUIBERT ET AL: "Impact of improved measurements on performance of a smart thermal energy system", IEEE INSTRUMENTATION & MEASUREMENT MAGAZINE, IEEE SERVICE CENTER, PISCATAWAY, NJ, US, Bd. 18, Nr. 1, 1. Februar 2015 (2015-02-01), Seiten 25-33, XP011571154, ISSN: 1094-6969, DOI: 10.1109/MIM.2015.7016678 [gefunden am 2015-01-20]
- MERAL M E ET AL: "Power quality improvement with an extended custom power park", ELECTRIC POWER SYSTEMS RESEARCH, ELSEVIER, AMSTERDAM, NL, Bd. 79, Nr. 11, 1. November 2009 (2009-11-01), Seiten 1553-1560, XP026469839, ISSN: 0378-7796, DOI: 10.1016/J.EPSR.2009.06.001 [gefunden am 2009-07-04]

## Beschreibung

Die Erfindung betrifft eine Netzregelungsschaltung und ein Verfahren zum Stabilisieren eines Energieversorgungsnetzes.

In elektrischen Energieübertragungsnetzen wird die Frage der Stabilisierung der Netzspannung und Netzfrequenz zunehmend wichtig. Bisher wurde ein großer Teil der Energie mittels großer thermischer Kraftwerke erzeugt, die zuverlässig und gut planbar Energie erzeugen. Im Zusammenhang mit einer immer stärkeren Integration von erneuerbaren Energiequellen wie Wind und Sonne bei gleichzeitiger Abschaltung von Kohle- und Kernkraftwerken schwankt die Einspeisung in das Energienetz stärker als früher und in kürzeren Zeitspannen, was zu Schwankungen der Netzspannung und Netzfrequenz führen kann. Konventionelle Stromerzeuger können derartige Schwankungen durch die Erregung des Generators (Netzspannung) und durch rotierende Massen (Netzfrequenz) verlangsamen und begrenzen. Windkraftanlagen und Photovoltaikanlagen sind jedoch über leistungselektronische Betriebsmittel an das Energieversorgungsnetz angeschlossen und stellen dem Netz somit keine rotierende Masse zur Verfügung.

Aus der Offenlegungsschrift WO 2012/045231 A1 ist ein Verfahren zum Stabilisieren eines Energieversorgungsnetzes bekannt, bei dem mittels einer steuerbaren Last die Frequenz des Energieversorgungsnetzes stabilisiert werden kann. Dazu wird bedarfsweise die in der Last auftretende Wirkleistung variiert.

Die Schrift CN 101924371 B offenbart ein Verfahren zum Verbessern der Stromqualität. Dazu sind an ein dreiphasiges Energienetz thyristorgeschaltete Kondensatoren, thyristorgesteuerte Induktivitäten, ein aktives Filter sowie ein statischer Blindleistungsgenerator angeschlossen.

Der Erfindung liegt die Aufgabe zugrunde, eine verbesserte Vorrichtung und ein verbessertes Verfahren zum Stabilisieren eines Energieversorgungsnetzes anzugeben.

Die Aufgabe wird erfindungsgemäß hinsichtlich der Vorrichtung durch die Merkmale des Anspruchs 1 und hinsichtlich des Verfahrens durch die Merkmale des Anspruchs 12 gelöst.

Vorteilhafte Ausgestaltungen der Erfindung sind Gegenstand der Unteransprüche.

Eine erfindungsgemäße Netzregelungsschaltung zum Stabilisieren eines Energieversorgungsnetzes umfasst einen statischen Blindleistungskompensator, einen elektronisch steuerbaren Lastwiderstand, einen ersten Leistungssteller, mittels dessen der Lastwiderstand elektronisch stellbar ist, und eine Steuereinheit zum Steuern oder Regeln des Blindleistungskompensators und des Lastwiderstands. Der Lastwiderstand ist in einem Widerstandsstromzweig angeordnet, der parallel zu wenigstens einem Kompensationsstromzweig des statischen Blindleistungskompensators geschaltet ist. Erfindungsgemäß werden also zum Stabilisieren eines Energieversorgungsnetzes ein statischer Blindleistungskompensator und ein elektronisch steuerbarer Lastwiderstand kombiniert, die durch eine übergeordnete Steuereinheit steuerbar oder regelbar sind. Dies ermöglicht, durch elektronische Steuerung oder Regelung des statischen Blindleistungskompensators und des Lastwiderstands die Netzspannung und die Netzfrequenz des Energieversorgungsnetzes zu stabilisieren sowie den Blindleistungsfluss und den Wirkleistungsfluss in dem Energieversorgungsnetz zu regeln oder zu steuern. Insbesondere kann der Lastwiderstand über den ersten Leistungssteller gezielt zur Energieentnahme aus dem Energieversorgungsnetz eingesetzt werden, um erforderlichenfalls die Netzfrequenz zu stabilisieren und den Wirkleistungsfluss in dem Energieversorgungsnetz zu kontrollieren. Die elektronische Steuerbarkeit des Lastwiderstands ermöglicht dabei vorteilhaft eine schnelle Zuschaltung des Lastwiderstands, die dem jeweiligen Energieentnahmebedarf angepasst ist. Mit dem statischen Blindleistungskompensator können insbesondere die Netzspannung stabilisiert und der Blindleistungsfluss kontrolliert werden.

Die Erfindung sieht vor, dass der erste Leistungssteller ein Thyristorsteller oder ein IGBT-Steller, d. h. ein Leistungssteller mit Bipolartransistoren mit isolierter Gate-Elektrode (IGBT, engl. insulated-gate bipolar transistor) ist, der eine Phasenanschnittsteuerung des Lastwiderstands ermöglicht. Dadurch kann vorteilhaft eine genaue Dosierung der Energieentnahme aus dem Energieversorgungsnetz erreicht werden, die dem jeweiligen Energieentnahmebedarf angepasst ist.

Eine weitere Ausgestaltung der Erfindung sieht vor, dass der Lastwiderstand ein elektrisch isolierendes Gehäuse und zwei in dem Gehäuse angeordnete Elektroden aufweist, wobei im Betrieb des Lastwiderstands das Gehäuse zumindest teilweise mit einer Flüssigkeit befüllt ist und die Elektroden unterschiedliche elektrische Potentiale aufweisen und in die Flüssigkeit eintauchen. Insbesondere ist die Verwendung eines aus der Patentanmeldung mit der Anmeldenummer PCT/EP2016/072571 bekannten Lastwiderstands vorgesehen. Derartige Lastwiderstände ermöglichen durch Anlegen einer Elektrodenspannung zwischen den Elektroden des Lastwiderstands schnell aus dem Energieversorgungsnetz Energie zu entnehmen, die durch Erwärmung der Flüssigkeit in dem Lastwiderstand in Wärme umgewandelt wird. Die Energieentnahme kann dabei durch die Steuerung der Elektrodenspannung gesteuert werden. Alternativ kann der Lastwiderstand auch anders ausgeführt sein, beispielsweise als ein luftgekühlter Widerstand.

Eine weitere Ausgestaltung der Erfindung sieht vor, dass der erste Leistungssteller in dem Widerstandsstromzweig angeordnet ist. Alternativ kann der erste Leistungssteller in Reihe zu der Parallelschaltung des Widerstandsstromzweigs und des wenigstens einen Kompensationsstromzweigs geschaltet sein. Bei der ersten Alternative wird der erste Leistungssteller speziell zur Stellung des Lastwiderstands eingesetzt. Bei der zweiten Alternative kann der erste Leistungssteller auch zur Stellung von Komponenten des Blindleistungskompensators eingesetzt werden, wodurch die Anzahl der Leistungssteller reduziert werden kann und dadurch auch die Kosten der Netzregelungsschaltung gesenkt werden können.

Die Erfindung sieht vor, dass in dem Widerstandsstromzweig ein erster Schalter angeordnet ist. Dies ermöglicht, den Lastwiderstand abzuschalten, wenn er nicht benötigt wird.

Eine weitere Ausgestaltung der Erfindung sieht vor, dass in einem ersten Kompensationsstromzweig eine Kompensationsdrossel angeordnet ist. Durch die Kompensationsdrossel kann vorteilhaft insbesondere der Blindleistungsfluss in dem Energieversorgungsnetz beeinflusst werden. Insbesondere kann in dem ersten Kompensationsstromzweig ferner ein zweiter Leistungssteller, beispielsweise ein Thyristorsteller, zum Stellen der Kompensationsdrossel oder ein zweiter Schalter angeordnet sein. Dadurch kann in dem ersten Kompensationsstromzweig ein thyristorgesteuerter Reaktor (TCR = Thyristor Controlled Reactor) oder ein mechanisch geschalteter Reaktor (MSR = Mechanically Switched Reactor) zur Blindleistungskompensation realisiert werden. Des Weiteren kann ein Bypass-Schalter parallel zu dem ersten Kompensationsstromzweig geschaltet sein. Ein derartiger Bypass-Schalter ist insbesondere bei der Realisierung einer thyristorgesteuerten Serienkompensation (TCSC = Thyristor Controlled Series Compensation) durch den Blindleistungskompensator vorteilhaft.

Eine weitere Ausgestaltung der Erfindung sieht vor, dass in einem zweiten Kompensationsstromzweig ein Kompensationskondensator angeordnet ist. Insbesondere kann in dem zweiten Kompensationsstromzweig ferner ein dritter Leistungssteller zum Stellen des Kompensationskondensators oder ein dritter Schalter angeordnet sein. Dadurch kann in dem zweiten Kompensationsstromzweig ein thyristorgesteuerter Kondensator (TSC = Thyristor Switched Capacitor) oder ein mechanisch geschalteter Kondensator (MSC = Mechanically Switched Capacitor) zur Blindleistungskompensation realisiert werden.

Eine weitere Ausgestaltung der Erfindung sieht vor, dass in einem dritten Kompensationsstromzweig ein Oberschwingungsfilter angeordnet ist. Dadurch können vorteilhaft Oberschwingungen in dem Energieversorgungsnetz reduziert werden.

Bei dem erfindungsgemäßen Verfahren zum Stabilisieren eines Energieversorgungsnetzes werden mittels einer erfindungsgemäßen Netzregelungsschaltung eine Netzspannung und eine Netzfrequenz des Energieversorgungsnetzes stabilisiert und ein Blindleistungsfluss und ein Wirkleistungsfluss geregelt oder gesteuert. Wie oben bereits ausgeführt wurde, kann dabei der Lastwiderstand über den ersten Leistungssteller gezielt zur schnellen Energieentnahme aus dem Energieversorgungsnetz eingesetzt werden, insbesondere um erforderlichenfalls die Netzfrequenz zu stabilisieren und den Wirkleistungsfluss in dem Energieversorgungsnetz zu kontrollieren, während mit dem statischen Blindleistungskompensator insbesondere die Netzspannung stabilisiert und der Blindleistungsfluss kontrolliert werden können.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 einen Schaltplan eines ersten Ausführungsbeispiels einer Netzregelungsschaltung zum Stabilisieren eines Energieversorgungsnetzes,
FIG 2 einen Schaltplan eines zweiten Ausführungsbeispiels einer Netzregelungsschaltung zum Stabilisieren eines Energieversorgungsnetzes,
FIG 3 einen Schaltplan eines dritten Ausführungsbeispiels einer Netzregelungsschaltung zum Stabilisieren eines Energieversorgungsnetzes,
FIG 4 einen Schaltplan eines vierten Ausführungsbeispiels einer Netzregelungsschaltung zum Stabilisieren eines Energieversorgungsnetzes,
FIG 5 einen Schaltplan eines fünften Ausführungsbeispiels einer Netzregelungsschaltung zum Stabilisieren eines Energieversorgungsnetzes,
FIG 6 einen Schaltplan eines sechsten Ausführungsbeispiels einer Netzregelungsschaltung zum Stabilisieren eines Energieversorgungsnetzes.

Einander entsprechende Teile sind in den Figuren mit den gleichen Bezugszeichen versehen.

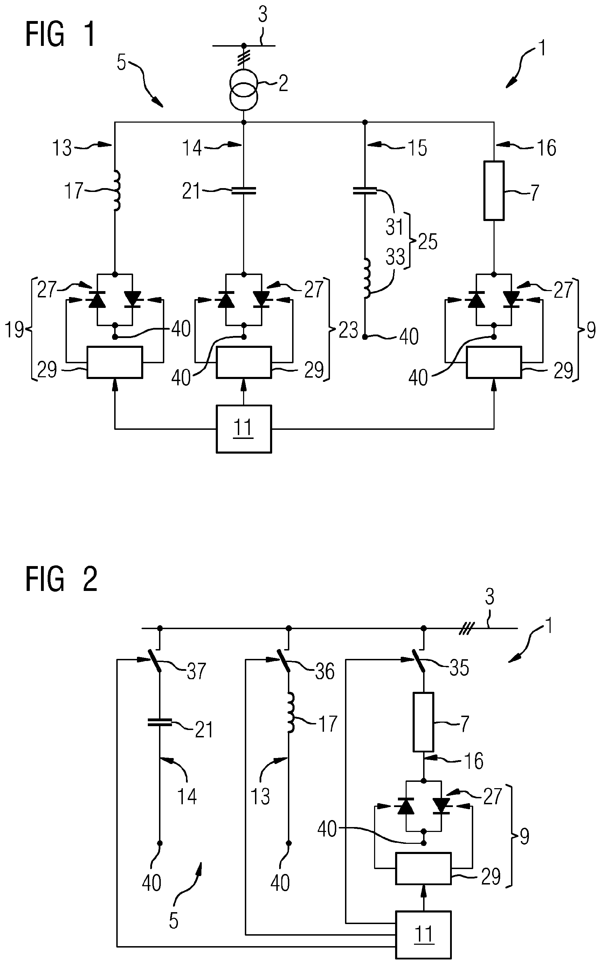

Figur 1 zeigt einen Schaltplan eines ersten Ausführungsbeispiels einer Netzregelungsschaltung 1 zum Stabilisieren eines dreiphasigen Energieversorgungsnetzes 3. Die Netzregelungsschaltung 1 umfasst einen statischen Blindleistungskompensator 5, für jede Phase des Energieversorgungsnetzes 3 einen elektronisch steuerbaren Lastwiderstand 7 und einen ersten Leistungssteller 9, und eine Steuereinheit 11 zum Steuern oder Regeln des Blindleistungskompensators 5 und der Lastwiderstände 7.

Der Blindleistungskompensator 5 umfasst mehrere jeweils dreiphasige Kompensationsstromzweige 13 bis 15, die parallel zueinander und zu einem dreiphasigen Widerstandsstromzweig 16 geschaltet sind. In einem ersten Kompensationsstromzweig 13 sind für jede Phase eine Kompensationsdrossel 17 und ein zweiter Leistungssteller 19 zum Stellen der Kompensationsdrossel 17 angeordnet, die zusammen einen thyristorgesteuerten Reaktor (TCR = Thyristor Controlled Reactor) bilden. In einem zweiten Kompensationsstromzweig 14 sind für jede Phase ein Kompensationskondensator 21 und ein dritter Leistungssteller 23 zum Stellen des Kompensationskondensators 21 angeordnet, die zusammen einen thyristorgesteuerten Kondensator (TSC = Thyristor Switched Capacitor) bilden. In einem dritten Kompensationsstromzweig 15 ist für jede Phase ein Oberschwingungsfilter 25 (FC = Fixed Filter Circuit) angeordnet. In dem Widerstandsstromzweig 16 sind für jede Phase ein Lastwiderstand 7 und ein erster Leistungssteller 9 angeordnet.

Jeder Leistungssteller 9, 19, 23 ist als ein Thyristorsteller ausgeführt, der eine Thyristorschaltung 27 mit zwei antiparallel zueinander geschalteten Thyristoren und eine Thyristorsteuereinheit 29 zur Ansteuerung der Thyristoren umfasst. Alle Leistungssteller 9, 19, 23 sind mit der Steuereinheit 11 verbunden und durch die Steuereinheit 11 ansteuerbar.

Jeder Oberschwingungsfilter 25 umfasst einen Filterkondensator 31 und eine dazu in Reihe geschaltete Filterdrossel 33.

Die Netzregelungsschaltung 1 ist beispielsweise durch einen Kopplungstransformator 2 an das Energieversorgungsnetz 3 gekoppelt. Die dreiphasigen Kompensationsstromzweige 13 bis 15 und der Widerstandsstromzweig 16 werden jeweils auf einen Sternpunkt 40 geführt. Die Sternpunkte 40 können gegeneinander isoliert, oder miteinander verbunden und gegen Erde isoliert, oder geerdet ausgeführt werden.

Jeder Lastwiderstand 7 weist ein elektrisch isolierendes Gehäuse und zwei in dem Gehäuse angeordnete Elektroden auf, wobei im Betrieb des Lastwiderstands 7 das Gehäuse zumindest teilweise mit einer Flüssigkeit befüllt ist und die Elektroden unterschiedliche elektrische Potentiale aufweisen und in die Flüssigkeit eintauchen. Ein derartiger Widerstand ist aus der Patentanmeldung mit der Anmeldenummer PCT/EP2016/072571 bekannt und wird daher hier nicht näher beschrieben. Alternativ können die Lastwiderstände 7 auch anders ausgeführt sein, beispielsweise jeweils als ein luftgekühlter Widerstand. Jeder Lastwiderstand 7 ist mittels eines ersten Leistungsstellers 9 elektronisch stellbar, wobei eine Elektrodenspannung zwischen den Elektroden des Lastwiderstands 7 mit einer Phasenanschnittsteuerung steuerbar ist.

Das in Figur 1 gezeigte Ausführungsbeispiel einer Netzregelungsschaltung 1 kann dahingehend abgewandelt werden, dass die Netzregelungsschaltung 1 wenigstens einen der Kompensationsstromzweige 13 bis 15, beispielsweise den zweiten Kompensationsstromzweig 14 oder den dritten Kompensationsstromzweig 15, nicht aufweist. Alternativ oder zusätzlich können zwei oder mehr der Thyristorsteuereinheiten 29 miteinander kombiniert werden statt jeweils separat ausgeführt zu sein. Beispielsweise kann die Thyristorsteuereinheit 29 eines ersten Leistungsstellers 9 in die Thyristorsteuereinheit 29 eines zweiten oder dritten Leistungsstellers 19, 23 integriert werden und/oder es kann für einen zweiten Leistungssteller 19 und einen dritten Leistungssteller 23 eine gemeinsame Thyristorsteuereinheit 29 vorgesehen sein. Ferner können eine, mehrere oder alle Thyristorsteuereinheiten 29 in die Steuereinheit 11 integriert sein.

Figur 2 zeigt einen Schaltplan eines zweiten Ausführungsbeispiels einer Netzregelungsschaltung 1 zum Stabilisieren eines dreiphasigen Energieversorgungsnetzes 3. Die Netzregelungsschaltung 1 umfasst einen statischen Blindleistungskompensator 5, für jede Phase des Energieversorgungsnetzes 3 einen elektronisch steuerbaren Lastwiderstand 7 und einen ersten Leistungssteller 9, und eine Steuereinheit 11 zum Steuern oder Regeln des Blindleistungskompensators 5 und der Lastwiderstände 7.

Der Blindleistungskompensator 5 umfasst zwei jeweils dreiphasige Kompensationsstromzweige 13, 14, die parallel zueinander und zu einem Widerstandsstromzweig 16 geschaltet sind. In dem Widerstandsstromzweig 16 sind für jede Phase ein Lastwiderstand 7, ein erster Leistungssteller 9 und ein erster Schalter 35, durch den die Phase des Widerstandsstromzweigs 16 abschaltbar (unterbrechbar) ist, angeordnet. In einem ersten Kompensationsstromzweig 13 sind für jede Phase eine Kompensationsdrossel 17 und ein zweiter Schalter 36, durch den die Phase des ersten Kompensationsstromzweigs 13 abschaltbar (unterbrechbar) ist, angeordnet, die zusammen einen mechanisch geschalteten Reaktor (MSR = Mechanically Switched Reactor) bilden. In einem zweiten Kompensationsstromzweig 14 sind für jede Phase ein Kompensationskondensator 21 und ein dritter Schalter 37, durch den die Phase des zweiten Kompensationsstromzweigs 14 abschaltbar (unterbrechbar) ist, angeordnet, die zusammen einen mechanisch geschalteten Kondensator (MSC = Mechanically Switched Capacitor) bilden.

Der Lastwiderstand 7 und der erste Leistungssteller 9 jeder Phase sind wie in dem anhand von Figur 1 beschriebenen Ausführungsbeispiel ausgeführt. Jeder erste Leistungssteller 9 und jeder Schalter 35 bis 37 ist mit der Steuereinheit 11 verbunden und durch die Steuereinheit 11 ansteuerbar. Durch die Schalter 35 bis 37 können die Kompensationsstromzweige 13, 14 und der Widerstandsstromzweig 16 unabhängig voneinander zu- und abgeschaltet werden. Durch jeden ersten Leistungssteller 9 kann ein Lastwiderstand 7 analog zu dem in dem anhand von Figur 1 beschriebenen Ausführungsbeispiel gestellt werden.

Die Phasen der Netzregelungsschaltung 1 werden auf einen Sternpunkt 40 geführt, der gegen Erde isoliert oder geerdet ausgeführt ist.

Das in Figur 2 gezeigte Ausführungsbeispiel einer Netzregelungsschaltung 1 kann dahingehend abgewandelt werden, dass die Netzregelungsschaltung 1 mehrere zu dem Widerstandsstromzweig 16 parallel geschaltete erste Kompensationsstromzweige 13 und/oder mehrere zu dem Widerstandsstromzweig 16 parallel geschaltete zweite Kompensationsstromzweige 14 und/oder wenigstens einen zu dem Widerstandsstromzweig 16 parallel geschalteten dritten Kompensationsstromzweig 16, in dem analog zu Figur 1 für jede Phase ein Oberschwingungsfilter 25 angeordnet ist, aufweist.

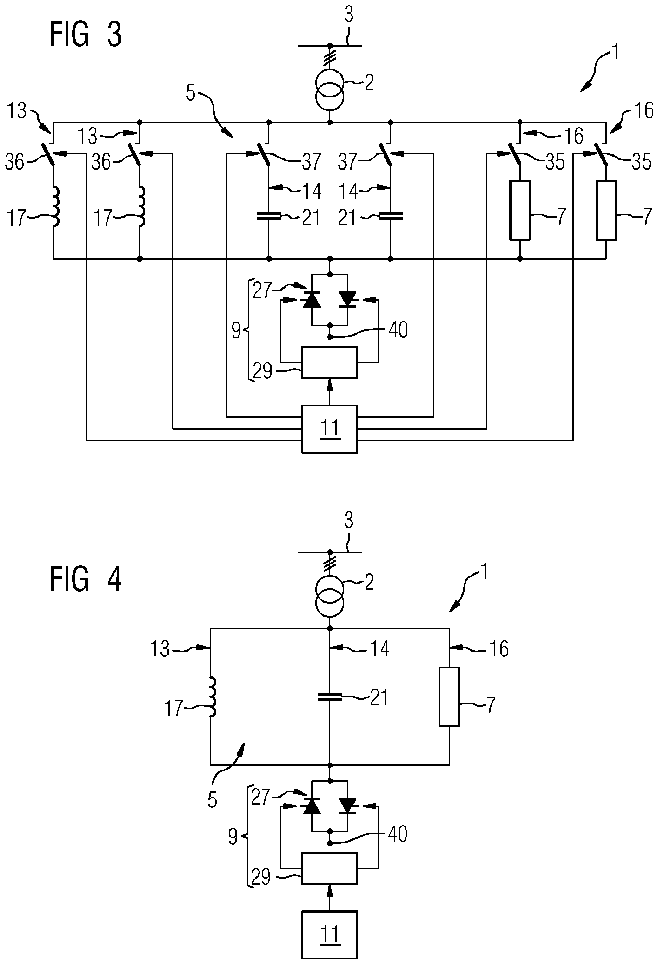

Figur 3 zeigt einen Schaltplan eines dritten Ausführungsbeispiels einer Netzregelungsschaltung 1 zum Stabilisieren eines dreiphasigen Energieversorgungsnetzes 3. Die Netzregelungsschaltung 1 umfasst einen statischen Blindleistungskompensator 5, für jede Phase zwei elektronisch steuerbare Lastwiderstände 7 und einen ersten Leistungssteller 9, und eine Steuereinheit 11 zum Steuern oder Regeln des Blindleistungskompensators 5 und der Lastwiderstände 7. Jeder Lastwiderstand 7 ist in einem Widerstandsstromzweig 16 angeordnet, in dem für jede Phase außerdem ein erster Schalter 35, durch die Phase des Widerstandsstromzweigs 16 abschaltbar (unterbrechbar) ist, angeordnet ist.

Der Blindleistungskompensator 5 umfasst zwei erste jeweils dreiphasige Kompensationsstromzweige 13 und zwei zweite jeweils dreiphasige Kompensationsstromzweige 14, die parallel zueinander und zu den Widerstandsstromzweigen 16 geschaltet sind. In jedem ersten Kompensationsstromzweig 13 sind für jede Phase eine Kompensationsdrossel 17 und ein zweiter Schalter 36, durch den die Phase des ersten Kompensationsstromzweigs 13 abschaltbar (unterbrechbar) ist, angeordnet. In jedem zweiten Kompensationsstromzweig 14 sind für jede Phase ein Kompensationskondensator 21 und ein dritter Schalter 37, durch den die Phase des zweiten Kompensationsstromzweigs 14 abschaltbar (unterbrechbar) ist, angeordnet.

Die Netzregelungsschaltung 1 ist wiederum beispielsweise durch einen Kopplungstransformator 2 an das Energieversorgungsnetz 3 gekoppelt. Die Phasen der Netzregelungsschaltung 1 werden auf einen Sternpunkt 40 geführt, der gegen Erde isoliert oder geerdet ausgeführt ist.

Jeder erste Leistungssteller 9 ist in Reihe zu der Parallelschaltung jeweils einer Phase der Kompensationsstromzweige 13, 14 und der Widerstandsstromzweige 16 geschaltet.

Jeder Lastwiderstand 7 und erste Leistungssteller 9 sind wie in dem anhand von Figur 1 beschriebenen Ausführungsbeispiel ausgeführt. Jeder erste Leistungssteller 9 und jeder Schalter 35 bis 37 ist mit der Steuereinheit 11 verbunden und durch die Steuereinheit 11 ansteuerbar. Durch die Schalter 35 bis 37 können die Kompensationsstromzweige 13, 14 und Widerstandsstromzweige 16 unabhängig voneinander zu- und abgeschaltet werden. Durch die ersten Leistungssteller 9 können die jeweils zugeschalteten Kompensationsdrosseln 17, Kompensationskondensatoren 21 und/oder Lastwiderstände 7 gestellt werden.

Das in Figur 3 gezeigte Ausführungsbeispiel einer Netzregelungsschaltung 1 kann dahingehend abgewandelt werden, dass die Netzregelungsschaltung 1 eine von Zwei verschiedene Anzahl von Widerstandsstromzweigen 16 und/oder eine von Zwei verschiedene Anzahl von ersten Kompensationsstromzweigen 13 und/oder eine von Zwei verschiedene Anzahl von zweiten Kompensationsstromzweigen 14 und/oder wenigstens einen zu den Widerstandsstromzweigen 16, ersten Kompensationsstromzweigen 13 und zweiten Kompensationsstromzweigen 14 parallel geschalteten dritten Kompensationsstromzweig 16, in dem analog zu Figur 1 für jede Phase ein Oberschwingungsfilter 25 angeordnet ist, aufweist.

Die Schalter 35 bis 37 der in den Figuren 2 und 3 gezeigten Ausführungsbeispiele sind beispielsweise als Leistungs- oder Trennschalter ausgebildet.

Figur 4 zeigt einen Schaltplan eines vierten Ausführungsbeispiels einer Netzregelungsschaltung 1 zum Stabilisieren eines dreiphasigen Energieversorgungsnetzes 3. Dieses Ausführungsbeispiel unterscheidet sich von dem in Figur 3 dargestellten Ausführungsbeispiel dadurch, dass die Netzregelungsschaltung 1 nur jeweils einen ersten Kompensationsstromzweig 13, zweiten Kompensationsstromzweig 14 und Widerstandsstromzweig 16 und keine Schalter 35 bis 37 aufweist.

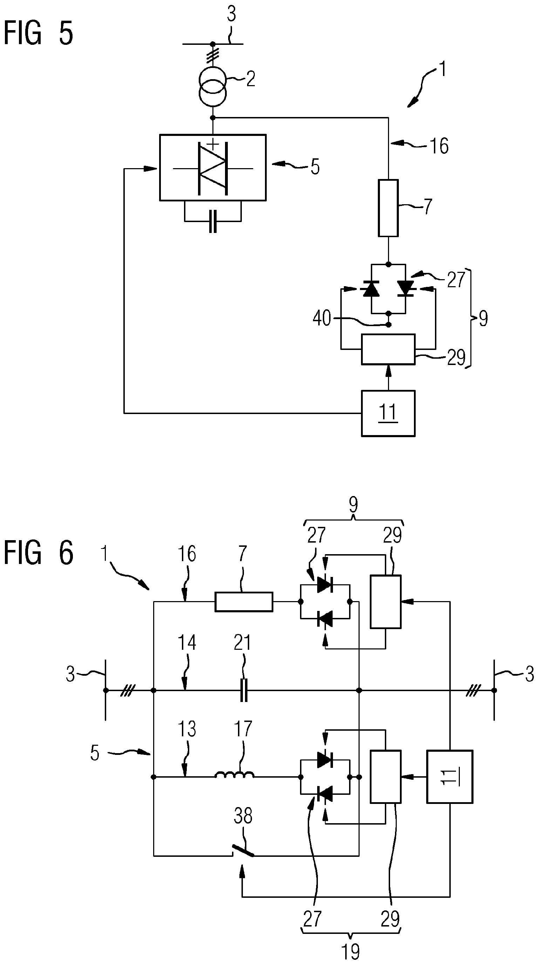

Figur 5 zeigt einen Schaltplan eines fünften Ausführungsbeispiels einer Netzregelungsschaltung 1 zum Stabilisieren eines dreiphasigen Energieversorgungsnetzes 3. Die Netzregelungsschaltung 1 umfasst einen statischen Blindleistungskompensator 5, für jede Phase einen elektronisch steuerbaren Lastwiderstand 7 und einen ersten Leistungssteller 9, und eine Steuereinheit 11 zum Steuern oder Regeln des Blindleistungskompensators 5 und der Lastwiderstände 7.

Der Blindleistungskompensator 5 weist einen modularen Multi-Level-Umrichter für die Blindleistungskompensation auf und ist wie in M. Pereira et al: "SVC PLUS: An MMC STATCOM for Network and Grid Access Applications", IEEE TRONDHEIM POWER TECH, 2011, beschrieben ausgeführt.

Der Lastwiderstand 7 und der erste Leistungssteller 9 jeder Phase sind in einem Widerstandsstromzweig 16 angeordnet, der parallel zu dem Blindleistungskompensator 5 geschaltet ist. Der Lastwiderstand 7 und der erste Leistungssteller 9 sind wie in dem anhand von Figur 1 beschriebenen Ausführungsbeispiel ausgeführt. Durch den ersten Leistungssteller 9 kann der Lastwiderstand 7 analog zu dem in dem anhand von Figur 1 beschriebenen Ausführungsbeispiel gestellt werden. Jeder erste Leistungssteller 9 und der Blindleistungskompensator 5 sind mit der Steuereinheit 11 verbunden und durch die Steuereinheit 11 ansteuerbar.

Die Netzregelungsschaltung 1 ist beispielsweise durch einen Kopplungstransformator 2 an das Energieversorgungsnetz 3 gekoppelt.

Figur 6 zeigt einen Schaltplan eines sechsten Ausführungsbeispiels einer Netzregelungsschaltung 1 zum Stabilisieren eines dreiphasigen Energieversorgungsnetzes 3. Die Netzregelungsschaltung 1 umfasst einen statischen Blindleistungskompensator 5, für jede Phase einen elektronisch steuerbaren Lastwiderstand 7 und einen ersten Leistungssteller 9, und eine Steuereinheit 11 zum Steuern oder Regeln des Blindleistungskompensators 5 und der Lastwiderstände 7.

Der Blindleistungskompensator 5 ist zur thyristorgesteuerten Serienkompensation (TCSC = Thyristor Controlled Series Compensation) ausgebildet und umfasst zwei jeweils dreiphasige Kompensationsstromzweige 13, 14, die parallel zueinander und zu einem dreiphasigen Widerstandsstromzweig 16 geschaltet sind. In einem ersten Kompensationsstromzweig 13 sind für jede Phase eine Kompensationsdrossel 17 und ein zweiter Leistungssteller 19 zum Stellen der Kompensationsdrossel 17 angeordnet. In einem zweiten Kompensationsstromzweig 14 ist für jede Phase ein Kompensationskondensator 21 angeordnet. Parallel zu den Kompensationsstromzweigen 13, 14 und dem Widerstandsstromzweig 16 ist für jede Phase ein Bypass-Schalter 38 geschaltet. In dem Widerstandsstromzweig 16 sind für jede Phase ein Lastwiderstand 7 und ein erster Leistungssteller 9 angeordnet.

Der Lastwiderstand 7 und die Leistungssteller 9, 19 jeder Phase sind wie in dem anhand von Figur 1 beschriebenen Ausführungsbeispiel ausgeführt. Durch jeden ersten Leistungssteller 9 kann ein Lastwiderstand 7 analog zu dem in dem anhand von Figur 1 beschriebenen Ausführungsbeispiel gestellt werden. Die Leistungssteller 9, 19 und Bypass-Schalter 38 sind mit der Steuereinheit 11 verbunden und durch die Steuereinheit 11 ansteuerbar.

In jedem der in den Figuren dargestellten Ausführungsbeispiele werden mit der Netzregelungsschaltung 1 eine Netzspannung und eine Netzfrequenz des Energieversorgungsnetzes 3 stabilisiert und ein Blindleistungsfluss und ein Wirkleistungsfluss geregelt oder gesteuert. Dabei kann durch Zuschalten eines Lastwiderstands 7 mittels eines ersten Schalters 35 beziehungsweise durch Stellen eines Lastwiderstands 7 mittels eines ersten Leistungsstellers 9 im Bedarfsfall jeweils kurzzeitig und schnell Energie aus dem Energieversorgungsnetz 3 entnommen werden, die durch Erwärmung der Flüssigkeit in dem Lastwiderstand 7 in Wärme umgewandelt wird.

### Bezugszeichenliste

- 1: Netzregelungsschaltung
- 2: Kopplungstransformator
- 3: Energieversorgungsnetz
- 5: Blindleistungskompensator
- 7: Lastwiderstand
- 9, 19, 23: Leistungssteller
- 11: Steuereinheit
- 13, 14, 15: Kompensationsstromzweig
- 16: Widerstandsstromzweig
- 17: Kompensationsdrossel
- 21: Kompensationskondensator
- 25: Oberschwingungsfilter
- 27: Thyristorschaltung
- 29: Thyristorsteuereinheit
- 31: Filterkondensator
- 33: Filterdrossel
- 35, 36, 37: Schalter
- 38: Bypass-Schalter
- 40: Sternpunkt

## Patentansprüche

1. Netzregelungsschaltung (1) zum Stabilisieren eines Energieversorgungsnetzes (3), umfassend
- einen statischen Blindleistungskompensator (5),
- einen elektronisch steuerbaren Lastwiderstand (7),
- einen ersten Leistungssteller (9), mittels dessen der Lastwiderstand (7) elektronisch stellbar ist, und
- eine Steuereinheit (11) zum Steuern oder Regeln des Blindleistungskompensators (5) und des Lastwiderstands (7),
- wobei der Lastwiderstand (7) in einem Widerstandsstromzweig (16) angeordnet ist, der parallel zu wenigstens einem Kompensationsstromzweig (13 bis 15) des statischen Blindleistungskompensators (5) geschaltet ist,
**dadurch gekennzeichnet, dass** der erste Leistungssteller (9) ein Thyristorsteller oder ein IGBT-Steller ist, der eine Phasenanschnittsteuerung des Lastwiderstands ermöglicht, und
in dem Widerstandsstromzweig (16) ein erster Schalter (35) angeordnet ist, der als Leistungs- oder Trennschalter ausgebildet ist.

2. Netzregelungsschaltung (1) nach Anspruch 1,
**dadurch gekennzeichnet, dass**
der Lastwiderstand (7) ein elektrisch isolierendes Gehäuse und zwei in dem Gehäuse angeordnete Elektroden aufweist,
wobei im Betrieb des Lastwiderstands (7) das Gehäuse zumindest teilweise mit einer Flüssigkeit befüllt ist und die Elektroden unterschiedliche elektrische Potentiale aufweisen und in die Flüssigkeit eintauchen.

3. Netzregelungsschaltung (1) nach einem der vorhergehenden Ansprüche,
**dadurch gekennzeichnet, dass**
der erste Leistungssteller (9) in dem Widerstandsstromzweig (16) angeordnet ist.

4. Netzregelungsschaltung (1) nach einem der Ansprüche 1 bis 2,
**dadurch gekennzeichnet, dass**
der erste Leistungssteller (9) in Reihe zu der Parallelschaltung des Widerstandsstromzweigs (16) und des wenigstens einen Kompensationsstromzweigs (13 bis 15) geschaltet ist.

5. Netzregelungsschaltung (1) nach einem der vorhergehenden Ansprüche,
**dadurch gekennzeichnet, dass**
in einem ersten Kompensationsstromzweig (13) eine Kompensationsdrossel (17) angeordnet ist.

6. Netzregelungsschaltung (1) nach Anspruch 5,
**dadurch gekennzeichnet, dass**
in dem ersten Kompensationsstromzweig (13) ein zweiter Leistungssteller (19) zum Stellen der Kompensationsdrossel (17) angeordnet ist.

7. Netzregelungsschaltung (1) nach Anspruch 6,
**dadurch gekennzeichnet, dass**
ein Bypass-Schalter (38) parallel zu dem ersten Kompensationsstromzweig (13) geschaltet ist.

8. Netzregelungsschaltung (1) nach Anspruch 5,
**dadurch gekennzeichnet, dass**
in dem ersten Kompensationsstromzweig (13) ein zweiter Schalter (36) angeordnet ist.

9. Netzregelungsschaltung (1) nach einem der vorhergehenden Ansprüche,
**dadurch gekennzeichnet, dass**
in einem zweiten Kompensationsstromzweig (14) ein Kompensationskondensator (21) angeordnet ist.

10. Netzregelungsschaltung (1) nach Anspruch 9,
**dadurch gekennzeichnet, dass**
in dem zweiten Kompensationsstromzweig (14) ein dritter Leistungssteller (23) zum Stellen des Kompensationskondensators (21) oder ein dritter Schalter (37) angeordnet ist.

11. Netzregelungsschaltung (1) nach einem der vorhergehenden Ansprüche,
**dadurch gekennzeichnet, dass**
in einem dritten Kompensationsstromzweig (15) ein Oberschwingungsfilter (25) angeordnet ist.

12. Verfahren zum Stabilisieren eines Energieversorgungsnetzes (3), wobei mittels einer gemäß einem der vorhergehenden Ansprüche ausgebildeten Netzregelungsschaltung (1) eine Netzspannung und eine Netzfrequenz des Energieversorgungsnetzes (3) stabilisiert und ein Blindleistungsfluss und ein Wirkleistungsfluss geregelt oder gesteuert werden.

## Claims

1. Grid regulation circuit (1) for stabilizing an energy supply grid (3), comprising:
- a static reactive power compensator (5),
- an electronically controllable load resistor (7),
- a first power controller (9) by means of which the load resistor (7) may be electronically actuated, and
- a control unit (11) for controlling or regulating the reactive power compensator (5) and the load resistor (7),
- wherein the load resistor (7) is arranged in a resistive current path (16) which is connected in parallel to at least one compensation current path (13 to 15) of the static reactive power compensator (5),
**characterized in that**
the first power controller (9) is a thyristor controller or an IGBT controller which allows phase gating control of the load resistor, and
a first switch (35) which is designed as a circuit breaker or an isolating switch is arranged in the resistive current path (16) .

2. Grid regulation circuit (1) according to Claim 1,
**characterized in that**
the load resistor (7) has an electrically insulating housing and two electrodes arranged in the housing, wherein the housing is at least partly filled with a liquid during operation of the load resistor (7) and the electrodes have different electrical potentials and are immersed in the liquid.

3. Grid regulation circuit (1) according to either of the preceding claims,
**characterized in that**
the first power controller (9) is arranged in the resistive current path (16).

4. Grid regulation circuit (1) according to either of Claims 1 and 2,
**characterized in that**
the first power controller (9) is connected in series to the parallel circuit formed by the resistive current path (16) and the at least one compensation current path (13 to 15).

5. Grid regulation circuit (1) according to one of the preceding claims,
**characterized in that**
a compensation inductor (17) is arranged in a first compensation current path (13).

6. Grid regulation circuit (1) according to Claim 5,
**characterized in that**
a second power controller (19) for actuating the compensation inductor (17) is arranged in the first compensation current path (13).

7. Grid regulation circuit (1) according to Claim 6,
**characterized in that**
a bypass switch (38) is connected in parallel to the first compensation current path (13).

8. Grid regulation circuit (1) according to Claim 5,
**characterized in that**
a second switch (36) is arranged in the first compensation current path (13).

9. Grid regulation circuit (1) according to one of the preceding claims,
**characterized in that**
a compensation capacitor (21) is arranged in a second compensation current path (14).

10. Grid regulation circuit (1) according to Claim 9,
**characterized in that**
a third power controller (23) for actuating the compensation capacitor (21) or a third switch (37) is arranged in the second compensation current path (14).

11. Grid regulation circuit (1) according to one of the preceding claims,
**characterized in that**
a harmonic filter (25) is arranged in a third compensation current path (15).

12. Method for stabilizing an energy supply grid (3), wherein a grid voltage and a grid frequency of the energy supply grid (3) are stabilized and a reactive power flow and an active power flow are regulated or controlled by means of a grid regulation circuit (1) designed according to one of the preceding claims.

## Revendications

1. Circuit (1) de régulation d'un réseau pour la stabilisation d'un réseau (3) d'alimentation en énergie, comprenant
- un compensateur (5) statique de puissance réactive,
- une résistance (7) de charge pouvant être commandée électroniquement,
- un premier régleur (9) de puissance, au moyen duquel la résistance (7) de charge peut être réglée électroniquement, et
- une unité (11) de commande pour la commande ou la régulation du compensateur (5) de puissance réactive et de la résistance (7) de charge,
- dans lequel la résistance (7) de charge est montée dans une branche (16) de courant de résistance, qui est montée en parallèle à au moins une branche (13 à 15) de courant de compensation du compensateur (5) statique de puissance réactive,
**caractérisé en ce que**
le premier régleur (9) de puissance est un régleur à thyristor ou un régleur à IGBT, qui rend possible une commande par phase de la résistance de charge, et
dans la branche (16) de courant de résistance est monté un premier interrupteur (35) constitué en interrupteur de puissance ou en sectionneur.

2. Circuit (1) de régulation d'un réseau suivant la revendication 1,
**caractérisé en ce que**
la résistance (7) de charge a un boîtier isolant électriquement et deux électrodes disposées dans le boîtier, dans lequel, lorsque la résistance (7) de charge est en fonctionnement, le boîtier est rempli, au moins en partie, d'un liquide et les électrodes ont des potentiels électriques différents et plongent dans le liquide.

3. Circuit (1) de régulation d'un réseau suivant l'une des revendications précédentes,
**caractérisé en ce que**
le premier régleur (9) de puissance est monté dans la branche (16) de courant de résistance.

4. Circuit (1) de régulation d'un réseau suivant l'une des revendications 1 à 2,
**caractérisé en ce que**
le premier régleur (9) de puissance est monté en série avec le circuit en parallèle de la branche (16) de courant de résistance et de la au moins une branche (13 à 15) de courant de compensation.

5. Circuit (1) de régulation d'un réseau suivant l'une des revendications précédentes,
**caractérisé en ce qu'**
une bobine (17) de compensation est montée dans la première branche (13) de courant de compensation.

6. Circuit (1) de régulation d'un réseau suivant la revendication 5,
**caractérisé en ce que**,
dans la première branche (13) de courant de compensation, est monté un deuxième régleur (19) de puissance pour le réglage de la bobine (17) de compensation.

7. Circuit (1) de régulation d'un réseau suivant la revendication 6,
**caractérisé en ce qu'**
un interrupteur (38) de dérivation est monté en parallèle à la première branche (13) de courant de compensation.

8. Circuit (1) de régulation d'un réseau suivant la revendication 5,
**caractérisé en ce qu'**
un deuxième interrupteur (36) est monté dans la première branche (13) de courant de compensation.

9. Circuit (1) de régulation d'un réseau suivant l'une des revendications précédentes,
**caractérisé en ce qu'**
un condensateur (21) de compensation est monté dans la deuxième branche (14) de courant de compensation.

10. Circuit (1) de régulation d'un réseau suivant la revendication 9,
**caractérisé en ce que**,
dans la deuxième branche (14) de courant de compensation, est monté un troisième régleur (23) de puissance pour le réglage du condensateur (21) de compensation ou un troisième interrupteur (37).

11. Circuit (1) de régulation d'un réseau suivant l'une des revendications précédentes,
**caractérisé en ce qu'**
un filtre (25) d'harmonique est monté dans une troisième branche (15) de courant de compensation.

12. Procédé de stabilisation d'un réseau (3) d'alimentation en énergie, dans lequel, au moyen d'un circuit (1) de régulation d'un réseau, constitué suivant l'une des revendications précédentes, on stabilise une tension et une fréquence du réseau (3) d'alimentation en énergie et on régule ou on commande un flux de puissance réactive et un flux de puissance active.
